# DEMANDE DE BREVET EUROPEEN

(11) **EP 4 343 296 A1**
(43) Date de publication de la demande: **27.03.2024**
(21) Numéro de dépôt: 23197603.6
(22) Date de dépôt: 15.09.2023
(51) Int. Cl.: G01L 3/10, G01L 25/00, B62M 6/50

(54) **PROCÉDÉ DE DÉTERMINATION D'UN COUPLE APPLIQUÉ ENTRE DEUX ORGANES TOURNANT**

(30) Priorité: 23.09.2022 FR 2209661
(71) Demandeur: NTN Europe, 74000 Annecy (FR)
(72) Inventeur: BACHMANN, Florian, 74000 Annecy (FR); DURET, Christophe, 74290 Bluffy (FR)
(74) Mandataire: Sayettat, Julien Christian

(57) **Abrégé**

L'invention concerne un procédé de détermination d'un couple appliqué entre deux organes tournant, ledit procédé comprenant une procédure de calibration de la détermination qui prévoit de : faire tourner un corps d'épreuve sur au moins un tour sous un couple de calibration constant entre les organes et utiliser un système de détermination pour définir des valeurs de calibration de l'écart angulaire en fonction de l'angle de rotation dudit corps d'épreuve, la détermination ultérieure du couple appliqué étant obtenue en corrigeant l'écart angulaire déterminé à un angle donné avec la valeur de calibration correspondante.

## Description

L'invention concerne un procédé de détermination d'un couple appliqué entre deux organes tournant autour d'un axe géométrique de rotation.

L'invention s'applique en particulier à la détermination d'un couple appliqué entre deux organes intégrés dans une transmission d'un couple moteur à un véhicule, par exemple entre le moteur électrique ou le pédalier et la transmission mécanique d'un vélo à assistance électrique.

Pour ce faire, il est connu d'utiliser un corps d'épreuve présentant une première - respectivement une deuxième - portion solidaire en rotation d'un premier - respectivement d'un deuxième - des organes, lesdites portions étant reliées par une structure déformable qui est agencée pour transmettre le couple entre les organes tout en autorisant un débattement angulaire entre lesdites portions.

Un tel corps d'épreuve peut être instrumenté avec un système de détermination du couple comprenant, pour chacune des portions :
- un codeur portant une piste apte à émettre un signal périodique représentatif du déplacement en rotation de la portion correspondante ; et
- un capteur comprenant un motif d'éléments sensibles disposé à distance de lecture de la piste pour délivrer un signal représentatif de la position angulaire du codeur correspondant.

Les documents FR-2 816 051, FR-2 821 931 et FR-2 862 382 décrivent l'utilisation d'un dispositif de comparaison de tels signaux qui est apte à déterminer un écart angulaire entre les portions, et donc le couple appliqué en ce qu'il induit ledit angle par torsion de la structure déformable.

La limite de cette solution réside dans la précision de la détermination du couple, notamment en relation avec des corps d'épreuve présentant une excentration des portions et/ou des pistes, une inhomogénéité des codeurs ou des non-linéarités des capteurs, qui peuvent provoquer une erreur lors de la comparaison des signaux de position pour déterminer l'angle qui est fonction du couple appliqué.

L'invention a pour but de résoudre les problèmes de l'art antérieur en proposant notamment un procédé de détermination d'un couple dont la précision est améliorée en permettant une correction des éventuels défauts relatifs entre les portions du corps d'épreuve, les codeurs et/ou les capteurs.

A cet effet, l'invention propose un procédé de détermination d'un couple appliqué entre deux organes tournant autour d'un axe géométrique de rotation, ledit procédé prévoyant :
- d'utiliser un corps d'épreuve présentant une première - respectivement une deuxième - portion solidaire en rotation d'un premier - respectivement d'un deuxième - desdits organes, lesdites portions étant reliées par une structure déformable qui est agencée pour transmettre le couple entre les organes tout en autorisant un débattement angulaire entre lesdites portions ;
- d'équiper le corps d'épreuve avec un système de détermination du couple comprenant, pour chacune des portions :
   ∘ un codeur portant une piste apte à émettre un signal périodique représentatif du déplacement en rotation de la portion correspondante ; et
   ∘ un capteur comprenant un motif d'éléments sensibles disposé à distance de lecture de la piste pour délivrer un signal représentatif de la position angulaire du codeur correspondant ;
   ledit système de détermination comprenant un dispositif de comparaison des signaux délivrés par chacun des capteurs, ledit dispositif étant apte à déterminer un écart angulaire entre les portions qui est fonction du couple appliqué ;
ledit procédé comprenant une procédure de calibration de la détermination du couple qui prévoit de :
- faire tourner le corps d'épreuve sur au moins un tour sous un couple de calibration constant entre les organes ;
- utiliser le système de détermination pour définir des valeurs de calibration de l'écart angulaire entre les portions en fonction de l'angle de rotation du corps d'épreuve ;
la détermination ultérieure du couple appliqué étant obtenue en corrigeant l'écart angulaire déterminé à un angle donné avec la valeur de calibration correspondante.

D'autres objets et avantages de l'invention apparaîtront dans la description qui suit de différents modes de réalisation d'un procédé selon l'invention pour déterminer un couple appliqué entre deux organes tournant autour d'un axe géométrique de rotation.

En particulier, le procédé permet la détermination d'un couple appliqué entre deux organes intégrés dans une transmission d'un couple moteur à un véhicule, par exemple entre le moteur électrique ou le pédalier et la transmission mécanique d'un vélo à assistance électrique.

Pour ce faire, le procédé utilise un corps d'épreuve présentant une première - respectivement une deuxième - portion solidaire en rotation d'un premier - respectivement d'un deuxième - des organes, lesdites portions étant reliées par une structure déformable qui est agencée pour transmettre le couple entre les organes tout en autorisant un débattement angulaire entre lesdites portions.

Selon une réalisation, le corps d'épreuve peut présenter une bague intérieure solidaire en rotation de moyens de montage dudit corps d'épreuve sur un organe, et une bague extérieure s'étendant autour de la bague intérieure en présentant des moyens de montage dudit corps d'épreuve sur l'autre organe, lesdites bagues étant reliées par au moins un bras déformable.

En variante, le corps d'épreuve peut être sous la forme d'une barre de torsion dont chaque extrémité présente une portion solidaire de respectivement un organe, la barre étant agencée pour se déformer en torsion en fonction du couple appliqué entre lesdits organes.

Pour déterminer le débattement angulaire des portions qui est fonction du couple appliqué, le corps d'épreuve est équipé d'un système comprenant, pour chacune des portions :
- un codeur portant une piste apte à émettre un signal périodique représentatif du déplacement en rotation de la portion correspondante ; et
- un capteur comprenant un motif d'éléments sensibles disposé à distance de lecture de la piste pour délivrer un signal représentatif de la position angulaire du codeur correspondant.

En particulier, une succession de paires de pôles Nord et Sud est aimantée sur respectivement un codeur pour former une piste magnétique multipolaire apte à émettre un signal magnétique de forme pseudo-sinusoïdale, ledit codeur étant associé en rotation à la portion correspondante.

De façon avantageuse, les capteurs comprennent un motif d'au moins deux éléments sensibles, notamment une pluralité d'éléments sensibles alignés tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste à détecter, par exemple de type AMR, TMR ou GMR, ou d'une sonde à effet Hall.

Selon une réalisation, la position angulaire peut être déterminée de façon incrémentale au moyen du signal émis par une piste magnétique. Selon une autre réalisation, la position angulaire peut être déterminée de façon absolue, c'est-à-dire par rapport à une position de référence, en prévoyant une piste magnétique secondaire ou un codage spécifique de la piste.

Le système de détermination du couple comprend un dispositif de comparaison des signaux délivrés par chacun des capteurs, ledit dispositif étant apte à déterminer un écart angulaire entre les portions qui est fonction du couple appliqué.

Selon une réalisation, les capteurs délivrent des signaux carrés incrémentaux en quadrature, le dispositif de comparaison comprenant des moyens de comptage fournissant la position angulaire de chacun des codeurs et des moyens de soustraction permettant de calculer la différence entre lesdites positions angulaires en fonction de l'angle de rotation.

En particulier, le système de détermination du couple peut comprendre des moyens d'application d'un facteur d'interpolation f₁ et f₂ au signal délivré par respectivement un capteur, les moyens de comptage mesurant un nombre de fronts n₁ et n₂ dans chacun desdits signaux interpolés.

En relation avec des pistes comprenant respectivement Npp₁ et Npp₂ paires de pôles Nord et Sud, les moyens de soustraction effectuent par exemple l'opération DIFF = Npp₂.f₂.n₁ - Npp₁.f₁.n₂ pour calculer la différence entre les positions angulaires.

En particulier, le système de détermination comprend des moyens d'application de facteurs d'interpolation tels que : f₂/f₁ = Npp₁/Npp₂. Lorsque les pistes présentent le même nombre de paires de pôles (Npp₁ = Npp₂), le calcul peut être réalisé par simple soustraction des fronts ni et ne avec un même facteur d'interpolation (f₁ = f₂).

Le procédé comprend une procédure de calibration de la détermination du couple qui prévoit de :
- faire tourner le corps d'épreuve sur au moins un tour sous un couple de calibration constant, et notamment sensiblement nul, entre les organes ;
- utiliser le système de détermination pour définir des valeurs de calibration de l'écart angulaire entre les portions en fonction de l'angle de rotation du corps d'épreuve.

Ainsi, la détermination ultérieure du couple appliqué peut être obtenue en corrigeant l'écart angulaire déterminé à un angle donné avec la valeur de calibration correspondante, de sorte à pouvoir éliminer les erreurs provenant d'éventuels défauts relatifs entre les portions, les codeurs et/ou les capteurs.

Le procédé peut prévoir de déterminer une position angulaire de référence par tour de corps d'épreuve, afin de pouvoir initier et/ou terminer la procédure de calibration en fonction de la détermination de ladite position angulaire de référence.

Pour ce faire, au moins un codeur peut porter une piste de référence apte à émettre un signal une fois par tour, le capteur disposé à distance de lecture de ladite piste délivrant la position angulaire de référence lors de la détection dudit signal émis.

De façon avantageuse, la détermination du couple peut être obtenue, pour un angle de rotation donné, notamment déterminé grâce à une position angulaire de référence, en soustrayant la valeur de calibration à la différence de positions angulaires calculée par les moyens de soustraction.

Selon une réalisation, les valeurs de calibration sont définies dans une table comprenant les différences DIFF calculées lors de la procédure de calibration en fonction d'un nombre de fronts comptés par au moins un moyen de comptage. En particulier, la table débute avec l'angle de référence.

Les valeurs DIFF de calibration peuvent être définies pour chaque front compté, ou pour un nombre entier de fronts comptés pour limiter le nombre de valeurs à calculer.

La table peut être enregistrée sous la forme d'une courbe, notamment en ayant été filtrée au préalable, par exemple par une moyenne mobile afin de la lisser. En variante, la table peut être utilisée telle quelle.

La courbe peut être enregistrée telle quelle, point par point, ou en étant divisée en sections angulaires pour limiter la place nécessaire en mémoire. En particulier, 360 sections correspondant chacune à 1° d'angle peuvent être envisagées, ou avantageusement 4 sections par paire de pôles magnétiques de la piste du codeur.

Chacune de ces sections peut être approximée par un segment de droite, représenté par deux paramètres, la pente et le décalage, permettant ensuite de calculer facilement la correction en fonction de l'angle sur la section concernée : erreur à corriger = (pente x angle) - décalage.

La courbe obtenue va ensuite servir à la correction de l'écart angulaire déterminé, en y retranchant, à un angle donné, notamment déterminé grâce à une position angulaire de référence, la valeur enregistrée à l'issue de la procédure de calibration.

Ainsi, cette procédure de calibration est simple à réaliser en ne nécessitant notamment pas de capteur angulaire et/ou de couple de référence ni de faire tourner le corps d'épreuve à vitesse constante. La correction apportée en fonctionnement est elle aussi simple à implémenter, notamment en ce qu'elle n'apporte aucun retard sur la détermination du couple en temps réel.

Selon une réalisation, la détermination du couple appliqué est réalisée dans un sens de rotation des organes, le couple de calibration résultant de la rotation des organes dans le sens de rotation inverse.

Cette solution est particulièrement avantageuse en relation avec la transmission d'un vélo, en ce qu'il est facile de faire un tour de pédalier sous couple nul grâce à la roue libre, en rétropédalage. Par ailleurs, la détermination en temps réel du couple appliqué est importante dans cette application en relation avec l'asservissement du moteur électrique d'assistance utilisant cette détermination.

La procédure de calibration peut être initiée au moyen d'une interface avec un utilisateur, par exemple au niveau du contrôleur de l'assistance d'un vélo électrique.

Selon une réalisation, la procédure de calibration est initiée, directement ou en demandant une action de l'utilisateur, par détection d'un état de rotation des organes.

L'état à détecter peut correspondre à une rotation sous un couple de calibration, connu ou sensiblement nul, par exemple correspondant à un sens de rotation des organes en détectant le rétropédalage pour un vélo. L'état peut également correspondre à un temps (depuis la dernière calibration ou après une révision), à un défaut de détermination du couple ou à une combinaison de ces paramètres.

## Revendications

1. Procédé de détermination d'un couple appliqué entre deux organes tournant autour d'un axe géométrique de rotation, ledit procédé prévoyant :
- d'utiliser un corps d'épreuve présentant une première - respectivement une deuxième - portion solidaire en rotation d'un premier - respectivement d'un deuxième - desdits organes, lesdites portions étant reliées par une structure déformable qui est agencée pour transmettre le couple entre les organes tout en autorisant un débattement angulaire entre lesdites portions ;
- d'équiper le corps d'épreuve avec un système de détermination du couple comprenant, pour chacune des portions :
∘ un codeur portant une piste apte à émettre un signal périodique représentatif du déplacement en rotation de la portion correspondante ; et
∘ un capteur comprenant un motif d'éléments sensibles disposé à distance de lecture de la piste pour délivrer un signal représentatif de la position angulaire du codeur correspondant ;
ledit système de détermination comprenant un dispositif de comparaison des signaux délivrés par chacun des capteurs, ledit dispositif étant apte à déterminer un écart angulaire entre les portions qui est fonction du couple appliqué ;
ledit procédé étant **caractérisé en ce qu'**il comprend une procédure de calibration de la détermination du couple qui prévoit de :
- faire tourner le corps d'épreuve sur au moins un tour sous un couple de calibration constant entre les organes ;
- utiliser le système de détermination pour définir des valeurs de calibration de l'écart angulaire entre les portions en fonction de l'angle de rotation du corps d'épreuve ;
la détermination ultérieure du couple appliqué étant obtenue en corrigeant l'écart angulaire déterminé à un angle donné avec la valeur de calibration correspondante.

2. Procédé de détermination d'un couple selon la revendication 1, **caractérisé en ce que** le couple de calibration est sensiblement nul.

3. Procédé de détermination d'un couple selon l'une des revendications 1 ou 2, **caractérisé en ce qu'**il prévoit la détermination du couple dans un sens de rotation des organes, le couple de calibration résultant de la rotation des organes dans le sens de rotation inverse.

4. Procédé de détermination d'un couple selon l'une quelconque des revendications 1 à 3, **caractérisé en ce qu'**il prévoit de déterminer une position angulaire de référence par tour de corps d'épreuve, la procédure de calibration étant initiée et/ou terminée en fonction de la détermination de ladite position angulaire de référence.

5. Procédé de détermination d'un couple selon la revendication 4, **caractérisé en ce qu'**il prévoit qu'au moins un codeur porte une piste de référence apte à émettre un signal une fois par tour, le capteur disposé à distance de lecture de ladite piste délivrant la position angulaire de référence lors de la détection dudit signal émis.

6. Procédé de détermination d'un couple selon l'une quelconque des revendications 1 à 5, **caractérisé en ce que** la procédure de calibration est initiée au moyen d'une interface avec un utilisateur.

7. Procédé de détermination d'un couple selon l'une quelconque des revendications 1 à 6, **caractérisé en ce que** la procédure de calibration est initiée par détection d'un état de rotation des organes.

8. Procédé de détermination d'un couple selon la revendication 7, **caractérisé en ce que** l'état de rotation des organes correspond à un temps, un sens de rotation des organes, un défaut de détermination du couple ou une combinaison de ces paramètres.

9. Procédé de détermination d'un couple selon l'une quelconque des revendications 1 à 8, **caractérisé en ce que** le dispositif de comparaison comprend des moyens de comptage fournissant la position angulaire de chacun des codeurs et des moyens de soustraction permettant de calculer la différence entre lesdites positions angulaires en fonction de l'angle de rotation, la détermination du couple étant obtenue, pour un angle de rotation donné, en soustrayant la valeur de calibration à la différence de positions angulaires calculée.

10. Procédé de détermination d'un couple selon la revendication 9, **caractérisé en ce que** le système de détermination du couple comprend des moyens d'application d'un facteur d'interpolation f₁ et f₂ au signal délivré par respectivement un capteur, les moyens de comptage mesurant un nombre de fronts n₁ et n₂ dans chacun desdits signaux interpolés.

11. Procédé de détermination d'un couple selon la revendication 10, **caractérisé en ce que** les valeurs de calibration sont définies dans une table comprenant les différences calculées lors de la procédure de calibration en fonction d'un nombre de fronts comptés par au moins un moyen de comptage.

12. Procédé de détermination d'un couple selon la revendication 11, **caractérisé en ce que** les valeurs de calibration sont définies pour chaque front compté, ou pour un nombre entier de fronts comptés.

13. Procédé de détermination d'un couple selon l'une des revendications 11 ou 12, **caractérisé en ce que** la table est enregistrée sous la forme d'une courbe.

14. Procédé de détermination d'un couple selon la revendication 13, **caractérisé en ce que** la courbe enregistrée est filtrée

15. Procédé de détermination d'un couple selon l'une des revendications 13 ou 14, **caractérisé en ce que** la courbe enregistrée est divisée en sections angulaires.
